# FASCICULE DE BREVET EUROPEEN

(11) **EP 0 792 036 B1**
(45) Date de publication et mention de la délivrance du brevet: **08.10.2003**
(21) Numéro de dépôt: 97400345.1
(22) Date de dépôt: 17.02.1997
(51) Int. Cl.: H04B 10/18, H04L 27/32

(54) **Procédé de transmission optique de données numériques**
Verfahren zur optischen Übertragung von digitalen Daten
Digital data optical transmission method

(30) Priorité: 23.02.1996 FR 9602275
(43) Date de publication de la demande: 27.08.1997
(73) Titulaire: ALCATEL, 75008 Paris (FR)
(72) Inventeur: Beylat, Jean-Luc, 92160 Antony (FR); Chesnoy José, 75014 Paris (FR); Penninckx, Denis, 91310 Montlhery (FR)
(74) Mandataire: Fournier, Michel Robert Marie

(56) Documents cités:
- WO-A-95/29539
- ELECTRONICS LETTERS, vol. 31, no. 4, 16 Février 1995, pages 302-304, XP000513693 YONENAGA K ET AL: "OPTICAL DUOBINARY TRANSMISSION SYSTEM WITH NO RECEIVER SENSITIVITY DEGRADATION"

## Description

L'invention se situe dans le domaine des transmissions de données numériques par des moyens optiques. Elle concerne plus particulièrement la transmission à haut débit sur des liaisons à longue distance utilisant des fibres optiques.

Une telle transmission s'effectue au moyen d'un émetteur optique relié à un récepteur optique par l'intermédiaire de la fibre. L'émetteur utilise une onde porteuse optique dont il module la puissance en fonction de l'information à transmettre. Habituellement, la modulation consiste à faire varier la puissance de l'onde porteuse entre deux niveaux : un niveau bas correspondant à une extinction de l'onde et un niveau haut correspondant à la puissance optique maximum d'un oscillateur laser. Par convention, les niveaux bas et hauts représentent respectivement les valeurs binaires "0" et "1". Les variations de niveau de l'onde sont déclenchées à des instants imposés par un signal d'horloge qui définit ainsi des cellules temporelles successives allouées aux données à transmettre.

D'une façon générale, la distance maximale d'une transmission est limitée par la possibilité pour les récepteurs de détecter sans erreur ces deux niveaux de puissance après propagation de l'onde modulée dans la liaison optique. Pour augmenter cette distance, on cherche généralement à augmenter le rapport entre la puissance optique du niveau haut à celle du niveau bas, ce rapport définissant le "taux d'extinction" qui est une des caractéristiques de la modulation.

Par ailleurs, pour une distance et un taux d'extinction donnés, le débit d'informations est limité par la dispersion chromatique engendrée dans les fibres. Cette dispersion qui résulte d'une dépendance de l'indice effectif de la fibre à la longueur d'onde de l'onde transportée a pour conséquence que la largeur des impulsions émises augmente au fur et à mesure de leur propagation le long de la fibre.

Pour limiter les conséquences de ce phénomène, il a été proposé de réduire la largeur de la bande spectrale du signal à transmettre au moyen d'un codage approprié. En particulier, on a proposé d'utiliser le code "duobinaire" bien connu dans le domaine des transmissions électriques. Ce code possède en effet la propriété de diviser par deux la largeur du spectre du signal. Selon ce code, on utilise un signal à trois niveaux symbolisés respectivement par 0, + et -. La valeur 0 binaire est codée par le niveau 0, la valeur 1 est codée soit par le niveau +, soit par le niveau - avec une règle de codage selon laquelle les niveaux codant deux blocs successifs de "1" entourant un nombre respectivement pair ou impair de "0" successifs sont respectivement identiques ou différents.

L'utilisation du code duobinaire pour les transmissions optiques a été mentionnée dans l'article intitulé : "10 Gbit/s unrepeatered three-level optical transmission over 100 km of standard fibre", X.Gu et al, ELECTRONICS LETTERS, 9 decembre 1993, Vol.29, No.25. Selon cet article, les trois niveaux 0, +, - correspondent respectivement à trois niveaux de puissance optique.

La demande de brevet français n°94 047 32, publiée sous le numéro FR-A-2 719 175 décrit également un codage duobinaire appliqué à l'optique. Selon ce document, la valeur "0" binaire correspond toujours à un niveau bas de la puissance optique mais les symboles + et - correspondent respectivement à un même niveau haut de puissance optique et se distinguent par un décalage de phase de la porteuse optique égal à 180°.

L'utilisation de ce dernier code duobinaire à inversion de phase est également mentionnée dans l'article "Optical duobinary transmission system with no receiver sensitivity degradation", K. Yonenaga et al, ELECTRONICS LETTERS, 16 février 1995, Vol.31, No.4.

Bien que ces comptes rendus d'expérimentation de ce code font part d'une amélioration par rapport au code NRZ classique ("non retour à zéro"), une telle amélioration n'est pas toujours constatée. Ainsi, lorsqu'on se rapproche des conditions idéales de mise en oeuvre de ce code, notamment en réalisant un taux d'extinction le plus élevé possible, on devrait être en mesure de vérifier une amélioration maximale. Paradoxalement, les simulations et les essais ont donné des résultats contraires à ceux que l'on attendait.

Or, si l'on analyse en détail les effets physiques du code duobinaire dans le contexte de l'optique, on peut constater qu'on obtient bien une diminution de la largeur du spectre du signal. Par contre, ce code n'a pas d'influence sur le spectre de chaque impulsion considérée isolément alors que ce dernier est déterminant pour ce qui concerne les effets de la dispersion chromatique.

Les résultats positifs relatés par divers articles sont difficilement explicables. En effet, si certains paramètres d'expérimentation sont vérifiables (longueur et qualité de la fibre, débit), d'autres paramètres ne sont pas contrôlables avec précision : caractéristiques des composants optiques et fonctionnement réel des circuits électroniques de contrôle.

Après simulations et essais en faisant varier les paramètres d'expérimentation, il est apparu qu'une amélioration est obtenue à condition qu'un décalage de phase de l'onde porteuse se produise à l'intérieur de chaque "0" qui précède ou qui succède à chaque bloc de "1" ou chaque "1" isolé. Par ailleurs, il ne faut pas chercher à ce que le niveau bas de puissance qui code les "0" soit le plus petit possible, c'est-à-dire que le taux d'extinction soit le plus élevé possible. En pratique, une valeur optimale du taux d'extiction est une fonction complexe des autres paramètres d'expérimentation.

Aussi l'invention a pour but de proposer un procédé de transmission optique exploitant les observations précédentes. On pourra désigner ce procédé par : "Transmission Binaire à Profil de Phase Contrôlé" ou par le sigle P S B T (de l'anglais : "Phase-Shaped Binary Transmission").

Plus précisément l'invention a pour objet un procédé transmission de données binaires contenues respectivement dans les cellules temporelles successives, lesdites données étant sous la forme d'un signal optique obtenu par modulation de puissance d'une onde porteuse optique, une première et une seconde valeur binaire d'une donnée correspondant respectivement à une puissance moyenne basse et haute à l'intérieur de chaque cellule contenant ladite donnée, caractérisé en ce qu'un décalage de phase est appliqué à ladite onde porteuse à l'intérieur de chaque cellule qui contient ladite première valeur binaire et qui précède ou succède à tout bloc de cellules consécutives contenant ladite seconde valeur binaire ou bien toute cellule isolée contenant ladite seconde valeur binaire.

Dans le but de simplifier la commande, on peut envisager d'effectuer ce décalage de phase systématiquement dans chaque cellule contenant la première valeur binaire. Toutefois, pour obtenir l'effet technique recherché, il suffit que le décalage de phase ait lieu dans chaque cellule contenant un "0" (niveau bas) et voisine d'un bloc de "1" ou d'un "1" isolé.

Par ailleurs, l'expérience montre qu'il est avantageux que la valeur absolue du décalage de phase pour une cellule isolée contenant un "0" soit supérieure à la valeur absolue du décalage de phase pour une cellule non isolée.

Selon un aspect plus particulier, la valeur absolue du décalage de phase pour une cellule isolée est de préférence comprise entre 90° et 180°. Dans le cas d'une cellule non isolée la valeur absolue du décalage de phase est comprise de préférence entre 45° et 180°.

Selon une première possibilité, on effectue les décalages de phase instantanément. Pour cela, on peut utiliser une structure interférométrique du type "Mach-Zehnder" ayant cette propriété. Selon une autre possibilité, le décalage de phase est réalisé de façon progressive. Selon cette variante, on est confronté en pratique à un problème supplémentaire dû à un phénomène dit de "chirp" selon lequel une variation de phase progressive s'accompagne d'une variation de phase parasite.

Pour tenir compte de ce phénomène et selon une variante de l'invention, le procédé est caractérisé en ce que ledit décalage de phase n'étant pas instantané, pour chaque cellule non isolée contenant la première valeur binaire et qui respectivement précède ou succède à une cellule isolée contenant la seconde valeur binaire ou un bloc de cellules consécutives contenant chacune la seconde valeur binaire, ledit décalage de phase correspond mathématiquement et/ou physiquement respectivement à une impulsion de fréquence négative ou positive.

D'autre part, lorsqu'on utilise un modulateur de phase, il est nécessaire de limiter le cumul des déphasages. Pour cela, on prévoira avantageusement que les décalages de phase effectués dans des cellules isolées successives contenant la première valeur binaire correspondent mathématiquement alternativement à des impulsions de fréquence positives et négatives de l'onde porteuse.

Selon encore une autre caractéristique contribuant à un meilleur résultat, les décalages de phase sont effectués sensiblement au milieu des cellules.

D'autres aspects de l'invention et de sa mise en oeuvre apparaîtront dans la suite de la description en référence aux figures.
- la figure 1 représente des chronogrammes illustrant le procédé selon l'invention.
- la figure 2 représente un premier exemple de mise en oeuvre du procédé selon l'invention.
- la figure 3 est un schéma électronique utilisé dans la réalisation de la figure 2.
- la figure 4 représente un second exemple de mise en oeuvre du procédé selon l'invention.
- la figure 5 est un schéma électronique utilisé dans la réalisation de la figure 4.

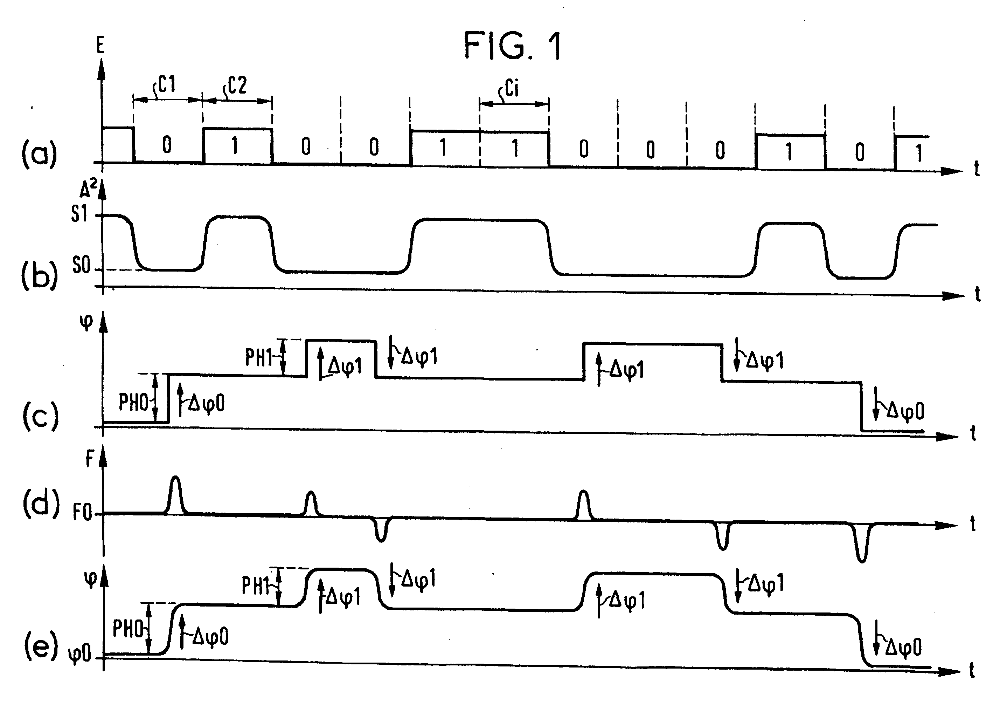

Le chronogramme a de la figure 1 représente une succession de données binaires à transmettre. Ces données sont par exemple sous la forme d'impulsions électriques E synchronisées par un signal d'horloge. Chaque intervalle de temps entre deux signaux d'horloge successifs est appelé "temps-bit" et définit une cellule temporelle C1, C2, Ci délimitant la valeur logique "0" ou "1" selon que le niveau du signal E est bas ou haut.

Selon l'invention, ces données binaires sont transmises sous la forme d'un signal optique modulé en puissance et en phase. Les chronogrammes b et c représentent respectivement les variations de la puissance A² et de la phase ϕ de l'onde optique émise. Comme représenté sur le chronogramme b, la puissance A² est modulée en réponse au signal E de façon à présenter dans chaque cellule une puissance moyenne basse S0 ou haute S1 selon que la donnée binaire vaut 0 ou 1. La puissance S0 du niveau bas a une valeur suffisante pour permettre des interférences entre les symboles 0 et 1 voisins au cours de la propagation de l'onde modulée dans la fibre de transmission.

Le chronogramme c représente les variations de la phase ϕ de l'onde émise par rapport à une référence arbitraire. Les sens de variation de phase représentés correspondent à la convention selon laquelle l'onde porteuse est représentée en fonction du temps t par l'expression complexe : Ap exp(jwₒt) et l'onde émise S d'amplitude A par : S = A exp [j(wt+ϕ)], où wₒ et w sont respectivement les pulsations de l'onde porteuse et de l'onde émise et ϕ est la phase de l'onde émise à un instant initial arbitrairement fixé. Avec cette convention, un décalage de phase respectivement positif ou négatif correspond mathématiquement à une impulsion de fréquence respectivement positive ou négative. Par ailleurs, mathématiquement le décalage sera progressif ou instantané selon que l'impulsion de fréquence correspondante est finie ou infinie.

Ainsi, la phase ϕ subit une variation Δϕ0 de valeur absolue PH0 à l'intérieur de chaque cellule contenant un 0 isolé et une variation de phase Δϕ1 de valeur absolue PH1 est imposée à l'intérieur de chaque cellule contenant un 0 non isolé et qui précède ou succède à une cellule 1.

Dans une version simplifiée du procédé selon l'invention, une variation de phase voisine de 180° en valeur absolue pourrait être appliquée systématiquement à l'intérieur de chaque cellule contenant un 0. Toutefois, d'après les études qui ont été effectuées, il est apparu que ces variations de phase devraient de préférence suivre les règles suivantes :
- PH0 est supérieur à PH1;
- les valeurs absolues PH0 et PH1 des décalages de phase sont comprises respectivement entre 90° et 180° et entre 45° et 180°;
- le décalage Δϕ1 dans une cellule 0 non isolée et qui précède un front montant est négatif;
- le décalage de phase Δϕ1 dans une cellule 0 qui succède à un front descendant est positif;

En outre, si on utilise un modulateur de phase, le cumul du déphasage sera limité si les décalages de phase Δϕ0 dans les cellules 0 isolées sont alternativement positifs et négatifs.

Dans ce qui précède, on a supposé que les décalages de phase se produisaient de façon instantanée. Ce mode de fonctionnement, avec un décalage de phase de 180° environ, peut être obtenu en pratique au moyen d'un montage interférométrique du type Mach-Zehnder par exemple. En effet, avec un tel dispositif, les changements de phase se produisent aux instants où la tension d'alimentation passe par une valeur déterminée qui correspond aussi à une valeur minimum de la puissance de l'onde émise. On peut aussi effectuer des décalages de phase progressifs en utilisant par exemple un modulateur de phase conformément aux réalisations qui vont être décrites.

ce dernier cas est illustré par les chronogrammes d et e de la figure 1. Comme représenté sur le chronogramme d, la fréquence instantanée f de l'onde émise présente des variations impulsionnelles finies positives ou négatives par rapport à la fréquence fo de l'onde porteuse. Ces variations de fréquence se traduisent par des décalages progressifs de la phase ϕ comme le montre le chronogramme e. On peut vérifier que les variations Δϕ1 de la phase dans les cellules 0 non isolées correspondent à des impulsions de fréquence positives ou négatives selon que la cellule succède à un front descendant ou précède un front montant de l'amplitude A de l'onde émise.

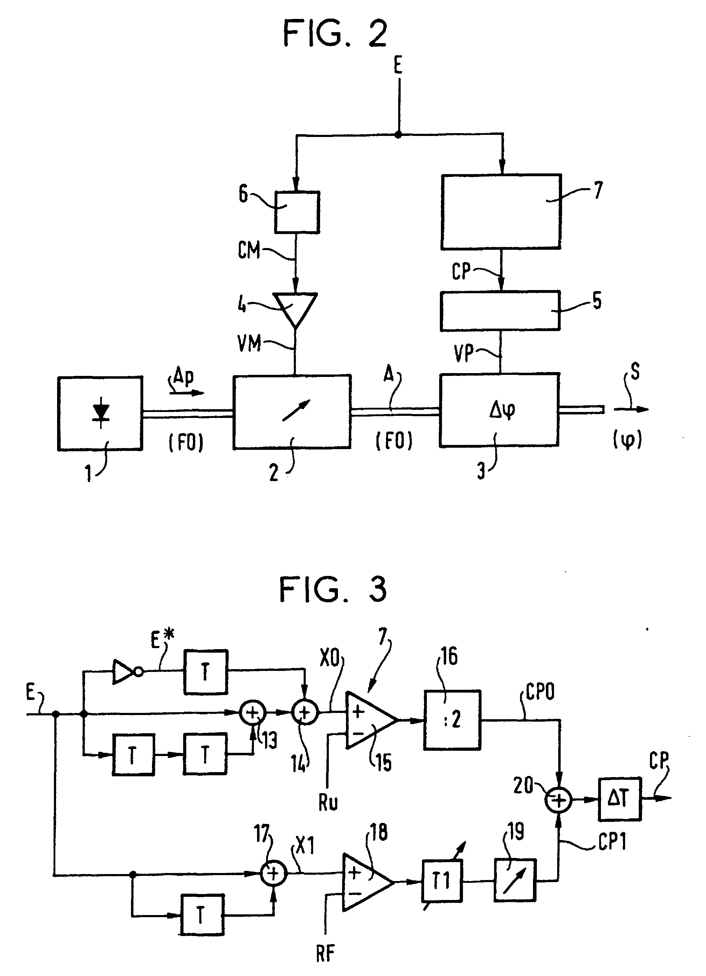

La figure 2 est une représentation schématique d'un premier exemple de mise en oeuvre du procédé selon l'invention. La partie optique est essentiellement constituée d'un oscillateur laser 1 couplée à un modulateur de puissance 2 lui-même couplé à un modulateur de phase 3. L'oscillateur 1 fournit au modulateur de puissance 2 l'onde porteuse d'amplitude Ap et de fréquence fo. Le modulateur de puissance 2 fournit au modulateur de phase 3 une onde d'amplitude variable A portée par la même fréquence fo. Le modulateur de phase 3 fournit l'onde émise S d'amplitude A et de phase ϕ. Le modulateur 2 reçoit sur ses électrodes une tension de commande VM fournie par un circuit d'alimentation électrique 4. De même, le modulateur de phase 3 reçoit du circuit électrique 5 une tension de commande de modulation VP. Les circuits d'alimentation 4 et 5 sont des sources de tension variables commandées respectivement par les signaux de commande CM et CP fournis respectivement par les circuits électroniques de commande 6 et 7. Les circuits 6 et 7 reçoivent en entrée le signal électrique E ayant par exemple la forme d'une modulation NRZ correspondant à la suite de données binaires à émettre. Dans ce cas, le circuit 6 peut être constitué d'un simple circuit de mise en forme pour adapter les niveaux du signal reçu E au circuit d'alimentation 4. Il contiendra éventuellement des moyens de retard appropriés pour synchroniser les commandes appliquées aux modulateurs 2 et 3. Avantageusement, les circuits 6 et 7 comprendront également des moyens de filtrage passe-bas permettant de limiter la bande passante de la modulation. Le circuit de commande de phase 7 est décrit plus en détails à la figure 3.

Le circuit 7 représenté à la figure 3 comporte une chaîne de commande de phase CP0 pour les "0" isolés (partie supérieure du schéma) et une chaîne de commande de phase CP1 pour les "0" non isolés voisins d'un "1" (partie inférieure du schéma). La chaîne supérieure comporte un premier additionneur analogique 13 recevant en entrées le signal E et le même signal E retardé de deux temps-bit T. Un second additionneur analogique 14 reçoit en entrée le signal fourni par l'additionneur 13 et le complément E* du signal d'entrée E retardé d'un temps-bit T. La sortie X0 de l'additionneur 14 est comparée à une tension de référence Ru dans un amplificateur différentiel 15 fonctionnant en comparateur. La tension Ru a une valeur comprise entre trois fois et deux fois le niveau haut du signal E. La sortie de l'amplificateur 15 est appliquée à l'entrée d'un diviseur de fréquence par deux 16 dont la sortie est reliée à une des entrées d'un additionneur analogique de sortie 20.

La chaîne de commande des "0" non isolés comporte un additionneur analogique 17 recevant le signal d'entrée E et le signal d'entrée E retardé d'un temps bit T. Le signal X1 fourni par l'additionneur 17 est comparé à une deuxième tension de référence Rf dans un second amplificateur différentiel 18 fonctionnant en comparateur. La tension Rf est comprise entre les niveaux bas et haut du signal E. La sortie de l'amplificateur 18 est reliée par l'intermédiaire d'un dispositif à retard variable T1 à un atténuateur variable 19 dont le signal de sortie CP1 est appliqué à la seconde entrée de l'additionneur 20. La sortie de l'additionneur est reliée à un autre dispositif à retard variable ΔT qui fournit en sortie le signal de commande de phase CP.

Concernant le fonctionnement du circuit de la figure 3, on vérifie aisément que le comparateur 15 fournit une impulsion d'un temps-bit T en présence d'un "0" isolé. Il en résulte que le signal CP0 en sortie du diviseur 16 change d'état à chaque fois qu'un "0" isolé est détecté. D'autre part, la sortie du comparateur 18 change d'état à chaque fois qu'un "0" non isolé précède ou succède à un "1". Les retards variables T1 et ΔT servent à recaler les signaux CP1 et CP0 par rapport au signal de commande d'amplitude CM. L'atténuateur 19 est prévu pour ajuster les amplitudes respectives PH0 et PH1 des décalages de phase Δϕ0 et Aϕ1. Ainsi, le signal de commande de phase CP présente des variations en fonction du temps similaires à celles de la phase ϕ, comme représenté par le chronogramme e de la figure 1.

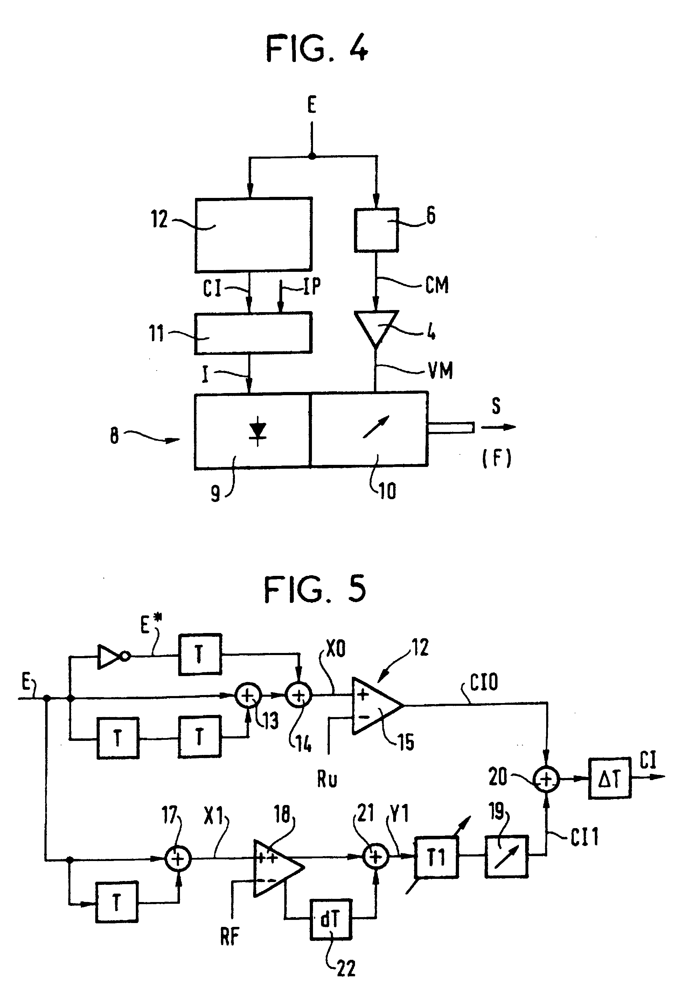

Selon le deuxième mode de réalisation représenté à la figure 4, la partie optique 8 comporte seulement un oscillateur laser 9 couplé optiquement à un modulateur de puissance 10. L'ensemble peut être simplement constitué d'un laser à modulateur intégré d'un type connu. La partie laser 9 reçoit un courant d'injection I fourni par un circuit d'alimentation 11. Le modulateur 10 reçoit la tension VM du circuit d'alimentation 4. Les circuits 11 et 4 sont commandés respectivement par les signaux CI et CM fournis respectivement par un circuit de commande d'impulsion de fréquence 12 et le circuit de commande de modulation de puissance 6. Les circuits de commande 12 et 6 reçoivent en entrée le signal électrique E.

Contrairement à la réalisation précédente, la modulation de phase est ici réalisée en agissant sur le courant I d'injection du laser 9. Cette réalisation utilise la propriété des lasers d'osciller à une fréquence variable en fonction du courant d'injection. Dans une réalisation optimisée, le laser sera conçu pour qu'une faible variation de courant entraîne une variation de fréquence suffisante sans que la puissance de l'onde émise subisse des fluctuations appréciables. De même, on choisira avantageusement un modulateur conçu pour introduire un chirp minimum.

Le circuit d'alimentation 11 est essentiellement constitué d'une source de courant modulable autour d'un courant de polarisation Ip. Comme dans la réalisation précédente, le circuit d'alimentation 4 est une source de tension variable en fonction du signal CM fourni par le circuit de commande 6. Le circuit 6 est un circuit de mise en forme pouvant intégrer la fonction de retard variable et de filtre passe-bas.

Le circuit de commande d'impulsion de fréquence 12 est représenté plus en détails à la figure 5. Il comporte une chaîne de commande d'impulsions de fréquence pour les "0" isolés (partie supérieure) et une chaîne de commande d'impulsion de fréquence pour les "0" non isolés voisins d'un "1" (partie inférieure). La partie supérieure est identique à celle de la réalisation précédente à la différence près que le diviseur de fréquence 16 est absent. Dans la partie inférieure, on retrouve l'additionneur analogique 17 recevant le signal d'entrée E et le signal E retardé d'un temps-bit T, ainsi que le comparateur 18 recevant le signal de sortie X1 de l'additionneur 17 et la référence Rf. La sortie directe du comparateur 18 est reliée à une première entrée d'un quatrième additionneur analogique 21. La sortie inverseuse du comparateur 18 est reliée à la seconde entrée de l'additionneur 21 par l'intermédiaire d'un dispositif à retard 22. Le signal Y1 fourni par l'additionneur 21 est relié à l'atténuateur 19 par l'intermédiaire du dispositif à retard variable T1. L'atténuateur 19 fournit le signal CI1 qui est reçu par une des entrées de l'additionneur de sortie 20 dont la seconde entrée reçoit le signal CI0 fourni par le comparateur 15. Le signal de sortie de l'additionneur 20 est appliqué à un dispositif à retard variable ΔT dont la sortie fournit le signal de commande d'impulsion de fréquence CI.

En fonctionnement, le signal CI0 fourni par le comparateur 15 a la forme d'une impulsion de durée égale au temps-bit T à chaque fois qu'un 0 isolé est détecté. La sortie directe du comparateur 18 change d'état à chaque fois qu'un 0 non isolé précède ou succède à un front descendant ou montant du signal E. Le retard dT imposé par le dispositif 22 étant inférieur à un temps-bit T, le signal Y1 fourni par l'additionneur 21 est formé d'impulsions alternativement positives et négatives à chaque fois qu'un "0" non isolé succède à ou précède un front respectivement descendant ou montant du signal E. Comme dans la réalisation précédente, les retards T1 et ΔT permettent de caler les signaux CI0 et CI1 par rapport au signal CM. L'atténuateur 19 sert à calibrer les impulsions du signal CI1 par rapport à celles du signal CI0. Ainsi, le signal CI fourni par le circuit 12 a la forme d'impulsions positives et négatives analogues aux impulsions de fréquence f représentées sur le chronogramme d de la figure 1, à la différence près que les impulsions de fréquence dans les "0" isolés sont toujours de même signe. En effet, avec cette réalisation, il est inutile de prévoir des alternances de signe..

A titre de comparaison, on peut indiquer qu'avec un débit de 10 Gbit/s, le procédé classique de modulation NRZ limite la distance de transmission à moins de 150 km, alors que le procédé de l'invention permet d'atteindre 300 km.

Un tel résultat sera par exemple obtenu dans les conditions suivantes :
- Temps-bit T : 100 ps
- Taux d'extinction S1/S0 : 10
- PH0 : 180°
- PH1 : 120°
- Temps de montée/descente des déphasages: 50 à 100 ps.
- Temps de montée/descente de la puissance optique : 25 à 50 ps.
- Décalage maximum de l'instant des déphasages Δϕ par rapport au milieu des cellules 0 : 10 ps

Bien entendu, on pourra aussi obtenir des améliorations par rapport à la modulation NRZ pour d'autres valeurs de taux d'extinction et de déphasage.

Ainsi, en faisant varier le taux d'extinction entre 5 et 100, on a pu vérifier qu'une amélioration encore plus grande peut être constatée si ce taux est inférieur à 20 environ.Par ailleurs, pour un taux d'extinction compris notamment entre 5 et 20, PH0 est de préférence supérieur à PH1, les plages de valeurs efficaces pour PH0 et PH1 étant respectivement 90° à 180° et 45° à 180°.

## Revendications

1. Procédé de transmission de données binaires contenues respectivement dans les cellules temporelles successives (C1, C2, Ci), lesdites données étant sous la forme d'un signal optique (S) obtenu par modulation de puissance d'une onde porteuse optique, une première et une seconde valeur binaire d'une donnée correspondant respectivement à une puissance moyenne basse (S0) et haute (S1) à l'intérieur de chaque cellule contenant ladite donnée, **caractérisé en ce qu'**un décalage de phase (Δϕ) est appliqué à ladite onde porteuse à l'intérieur de chaque cellule qui contient ladite première valeur binaire et qui précède ou succède à tout bloc de cellules consécutives contenant ladite seconde valeur binaire ou bien toute cellule isolée contenant ladite seconde valeur binaire.

2. Procédé selon la revendication 1, **caractérisé en ce que** ledit décalage de phase (Δϕ) n'est pas systématiquement appliqué dans chacune des cellules contenant ladite première valeur binaire.

3. Procédé selon l'une des revendications 1 ou 2, **caractérisé en ce que** la valeur absolue (PH0) du décalage de phase (Δϕ0) effectué dans une cellule isolée contenant la première valeur binaire est supérieure à la valeur absolue (PH1) du décalage de phase (Δϕ1) effectué dans une cellule non isolée.

4. Procédé selon l'une des revendications 1 à 3, **caractérisé en ce que** la valeur absolue (PH0) du décalage de phase (Δϕ0) effectué dans une cellule isolée contenant la première valeur binaire est comprise entre 90° et 180°.

5. Procédé selon l'une des revendications 1 à 4, **caractérisé en ce que** la valeur absolue (PH1) du décalage de phase (Δϕ1) effectué dans une cellule non isolée contenant la première valeur binaire est comprise entre 45° et 180°.

6. Procédé selon l'une des revendications 1 ou 2, **caractérisé en ce que** la valeur absolue (PH0) du décalage de phase (Δϕ0) effectué dans une cellule isolée contenant la première valeur binaire est voisine de 180° et **en ce que** la valeur absolue (PH1) du décalage de phase (Δϕ1) effectuée dans une cellule non isolée contenant la première valeur binaire est voisine de 120°.

7. Procédé selon l'une des revendications 1 à 6, **caractérisé en ce que** ledit décalage de phase (Δϕ) n'étant pas instantané, pour chaque cellule non isolée contenant la première valeur binaire et qui respectivement précède ou succède à une cellule isolée contenant la seconde valeur binaire ou un bloc de cellules consécutives contenant chacune la seconde valeur binaire, ledit décalage de phase (Δϕ1) correspond mathématiquement et/ou physiquement respectivement à une impulsion de fréquence négative ou positive.

8. Procédé selon l'une des revendications 1 à 7, **caractérisé en ce que** les décalages de phase (Δϕ0) effectués dans des cellules isolées successives contenant la première valeur binaire correspondent mathématiquement alternativement à des impulsions de fréquence positives et négatives de l'onde porteuse.

9. Procédé selon l'une des revendications 1 à 8, **caractérisé en ce que** les décalages de phase (Δϕ0, Δϕ1) sont effectués sensiblement au milieu des cellules.

10. Procédé selon l'une des revendications 1 à 9, **caractérisé en ce que** le rapport de ladite puissance optique moyenne haute (S1) à ladite puissance optique moyenne basse (S0) est au plus égal à 20.

## Patentansprüche

1. Verfahren zur Übertragung von jeweils in aufeinanderfolgenden zeitlichen Zellen (C1, C2, Ci) enthaltenen Binärdaten, wobei die Daten in Form eines optischen Signals (S), erhalten durch Modulation der Leistung einer optischen Trägerwelle, vorliegen, ein erster und ein zweiter Binärwert eines Datenwerts jeweils einer niedrigen mittleren Leistung (S0) bzw. einer hohen mittleren Leistung (S1) innerhalb jeder den Datenwert enthaltenden Zelle entspricht, **dadurch gekennzeichnet, dass** eine Phasenverschiebung (Δϕ) auf die Trägerwelle innerhalb jeder Zelle angewendet wird, die den ersten Binärwert enthält und die jedem Block von aufeinanderfolgenden Zellen, die den zweiten Binärwert enthalten, oder jeder isolierten Zelle, die den zweiten Binärwert enthält, vorangeht oder diesem/dieser folgt.

2. Verfahren nach Anspruch 1, **dadurch gekennzeichnet, dass** die Phasenverschiebung (Δϕ) nicht systematisch aufjede der Zellen, die den ersten Binärwert enthalten, angewendet wird.

3. Verfahren nach einem der Ansprüche 1 oder 2, **dadurch gekennzeichnet, dass** der Betrag (PH0) der an einer den ersten Binärwert enthaltenden isolierten Zelle vorgenommenen Phasenverschiebung (Δϕ0) größer als der Betrag (PH1) der an einer nicht isolierten Zelle vorgenommenen Phasenverschiebung (Δϕ1) ist.

4. Verfahren nach einem der Ansprüche 1 bis 3, **dadurch gekennzeichnet, dass** der Betrag (PH0) der an einer den ersten Binärwert enthaltenden isolierten Zelle vorgenommenen Phasenverschiebung (Δϕ0) zwischen 90° und 180° liegt.

5. Verfahren nach einem der Ansprüche 1 bis 4, **dadurch gekennzeichnet, dass** der Betrag (PH1) der an einer nicht isolierten, den ersten Binärwert enthaltenden Zelle vorgenommenen Phasenverschiebung (Δϕ1) zwischen 45° und 180° liegt.

6. Verfahren nach einem der Ansprüche 1 oder 2, **dadurch gekennzeichnet, dass** der Betrag (PH0) der an einer isolierten, den ersten Binärwert enthaltenden Zelle vorgenommenen Phasenverschiebung (Δϕ0) nahe bei 180° liegt, und dass der Betrag (PH1) der an einer nicht isolierten, den ersten Binärwert enthaltenden Zelle vorgenommenen Phasenverschiebung (Δϕ1) in der Nähe von 120° liegt.

7. Verfahren nach einem der Ansprüche 1 bis 6, **dadurch gekennzeichnet, dass** die Phasenverschiebung (Δϕ0) nicht instantan ist und dass für jede nicht isolierte Zelle, die den ersten Binärwert enthält und der eine den zweiten Binärwert enthaltende isolierte Zelle oder ein Block von jeweils den zweiten Binärwert enthaltenden aufeinanderfolgenden Zellen vorangeht oder ihr nachfolgt, die Phasenverschiebung (Δϕ1) mathematisch und/oder physikalisch jeweils einem Impuls mit negativer oder positiver Frequenz entspricht.

8. Verfahren nach einem der Ansprüche 1 bis 7, **dadurch gekennzeichnet, dass** die an aufeinanderfolgenden isolierten, den ersten Binärwert enthaltenden Zellen vorgenommenen Phasenverschiebungen (Δϕ0) mathematisch alternativ Impulsen mit positiver Frequenz und mit negativer Frequenz der Trägerwelle entsprechen.

9. Verfahren nach einem der Ansprüche 1 bis 8, **dadurch gekennzeichnet, dass** die Phasenverschiebungen (Δϕ0, Δϕ1) im Wesentlichen in der Mitte der Zellen vorgenommen werden.

10. Verfahren nach einem der Ansprüche 1 bis 9, **dadurch gekennzeichnet, dass** das Verhältnis zur hohen mittleren optischen Leistung (S1) zu der niedrigen mittleren optischen Leistung (S0) maximal 20 beträgt.

## Claims

1. A method of transmitting binary data contained in respective successive time cells (C1, C2, Ci), said data being in the form of an optical signal (S) obtained by power modulation of an optical carrier wave, a first and a second binary data value respectively corresponding to a low (S0) and a high (S1) mean power within each cell containing said data, **characterized in that** a phase-shift (Δϕ) is applied to said carrier wave within each cell that contains said first binary value and precedes or follows any block of consecutive cells containing said second binary value or any isolated cell containing said second binary value.

2. A method according to claim 1 **characterized in that** said phase-shift (Δϕ) is not applied systematically in each cell containing said first binary value.

3. A method according to either claim 1 or claim 2 **characterized in that** the phase-shift (Δϕ0) in an isolated cell containing the first binary value has an absolute value (PH0) greater than the absolute value (PH1) of the phase-shift (Δϕ1) in a non-isolated cell.

4. A method according to any of claims 1 to 3 **characterized in that** the phase-shift (Δϕ0) in an isolated cell containing the first binary value has an absolute value (PH0) between 90° and 180°.

5. A method according to any of claims 1 to 4 **characterized in that** the phase-shift (Δϕ1) in a non-isolated cell containing the first binary value has an absolute value (PH1) between 45° and 180°.

6. A method according to either claim 1 or claim 2 **characterized in that** the phase-shiff (Δϕ0) in an isolated cell containing the first binary value has an absolute value (PH0) of approximately 180° and **in that** the phase-shift (Δϕ1) in a non-isolated cell containing the first binary value has an absolute value (PH1) of approximately 120°.

7. A method according to any of claims 1 to 6 **characterized in that** said phase-shift (Δϕ) is not instantaneous and for each non-isolated cell containing the first binary value and that respectively precedes or follows an isolated cell containing the second binary value or a block of consecutive cells each containing the second binary value, said phase-shift (Δϕ1) corresponds mathematically and/or physically to a negative or positive frequency pulse, respectively.

8. A method according to any of claims 1 to 7 **characterized in that** the phase-shifts (Δϕ0) in successive isolated cells containing the first binary value alternately correspond mathematically to positive and negative frequency pulses of the carrier wave.

9. A method according to any of claims 1 to 8 **characterized in that** the phase-shifts (Δϕ0, Δϕ1) are substantially at the centre of the cells.

10. A method according to any of claims 1 to 9 **characterized in that** the ratio of said high mean optical power (S1) to said low mean optical power (S0) is at most equal to 20.
